# EUROPÄISCHE PATENTSCHRIFT

(11) **EP 0 563 822 B1**
(45) Veröffentlichungstag und Bekanntmachung des Hinweises auf die Patenterteilung: **19.06.1996**
(21) Anmeldenummer: 93105022.3
(22) Anmeldetag: 26.03.1993
(51) Int. Cl.: A61C 13/08

(54) **Serienmässig hergestellter Kunstzahnrohling**
Artificial tooth-blank produced in series
Dent artificielle brute produite en série

(30) Priorität: 01.04.1992 DE 4210781
(43) Veröffentlichungstag der Anmeldung: 06.10.1993
(73) Patentinhaber: Vita Zahnfabrik H. Rauter GmbH & Co KG, D-79713 Bad Säckingen (DE)
(72) Erfinder: Freyer, Martha, W-7880 Bad Säckingen (DE); Mattern, Rainer, W-7880 Bad Säckingen 12 (DE)
(74) Vertreter: Werner, Hans-Karsten, Dr.Dipl.-Chem.

(56) Entgegenhaltungen:
- CH-A- 371 862
- US-A- 3 621 576
- US-A- 4 187 608

## Beschreibung

Gegenstand der vorliegenden Erfindung ist ein serienmäßig hergestellter Kunstzahnrohling, bestehend aus gebrannter dentalkeramischer Masse in Dentinfarbe, in welcher ein vorgebrannter Hartkern eingelagert ist, und einer Retention (wie in CH-A-371 862 offenbart).

Künstliche Zähne werden in den verschiedensten Formen und Farben sowie aus den verschiedensten Materialien hergestellt. Während Kunststoffzähne im allgemeinen mit dem Basismaterial durch Polymerisation und Vernetzung verbunden werden, benötigen künstliche Zähne aus gebrannten keramischen Massen im allgemeinen eine Retention. Diese kann im einfachsten Falle in einer stabilen Verklebung bestehen, vorzugsweise werden jedoch darüber hinausgehende Befestigungsvorrichtungen eingesetzt. Während Backenzähne oftmals eine unterschnittene Retentionsöffnung mit ein oder Zwei feinen Entlüftungskanälen aufweisen, werden insbesondere Frontzähne mit einem oder zwei Retentionsstiften ausgerüstet. Dies geschieht beispielsweise dadurch, daß in die noch ungebrannte keramische Masse eine Metallhülse eingesetzt wird, die darüber hinaus einen Außenwulst aufweist, der die Hülse in der gebrannten Keramikmasse fest verankert. In diese Hülsen werden dann später die Retentionsstifte eingelötet. Diese bestehen in den meisten Fällen aus einer Nickellegierung, die mit einer dünnen Goldschicht überzogen ist. Zum Einlöten werden ein geeignetes Lot und der Stift in die Hülse eingesetzt, dann werden die schon gebrannten Kunstzähne in einem Ofen auf Temperaturen erhitzt, bei denen das Lot schmilzt. Nach dem Abkühlen sind dann diese Stifte gut und dauerhaft mit der Hülse verbunden.

Zur dauerhaften Befestigung der Hülse in der keramischen Masse hat es sich bewährt, diese zusammen mit einem vorgepreßten Hartkern in die noch ungebrannte keramische Masse in Dentinfarbe einzulagern. Die keramische Masse in Dentinfarbe besteht bei einigen künstlichen Zähnen aus einer etwas dunkler eingefärbten Rücken- oder Halsmasse und einer meist etwas heller eingefärbten Dentinmasse zur Zahnfront hin. Vielfach wird aber bereits auf diese Unterscheidung verzichtet, so daß die Rücken- und Halsmasse und die zur Front hin befindliche Masse aus dem gleichen Material bestehen. Zur Frontseite hin befindet sich darüber hinaus noch eine transparente Schmelzmasse. Diese besteht im allgemeinen aus dem gleichen keramischen Material, jedoch ohne opakisierende Zusätze. Die mit den ungebrannten keramischen Massen gefüllten Matrizen für die Vorderseite der Zähne werden mit den entsprechend gefüllten Matrizen für die Rückseite - gegebenenfalls schon mit einem eingesetzten Hartkern mit Hülse - aufeinander gepreßt und bei erhöhter Temperatur getrocknet. Diese getrockneten Rohlinge werden kontrolliert, geputzt und bei Temperaturen zwischen 1100°C und 1350°C gebrannt. In die fertig gebrannten künstlichen Zähne werden dann die Retentionsstifte eingelötet.

Die unterschnittenen Löcher mit Entlüftungskanälen der Backenzähne werden im allgemeinen hergestellt durch Einsetzen von konischen Holzpflöcken, die beim Brennen vollständig verbrennen.

Durch die Entwicklung hochwertiger Klebstoffe und Klebmassen besteht inzwischen prinzipiell auch die Möglichkeit, auf diese Retentionsstifte bzw. Retentionslöcher zu verzichten und die künstlichen Zähne aus gebrannten keramischen Massen mit dem Basismaterial zu verkleben. Diese Methode hat aber bisher keine praktische Anwendung gefunden.

Ein wesentlicher Nachteil sämtlicher serienmäßig hergestellter künstlicher Zähne aus gebrannter dentalkeramischer Masse besteht darin, daß eine erhebliche Anzahl von verschiedenen Formen und Farben zur Verfügung gestellt werden muß, um entsprechende zum jeweiligen Patiententyp und gegebenenfalls noch vorhandenen Zähnen des Patienten passende künstliche Zähne auswählen zu können. Trotz der bereits seit Jahren angebotenen Vielfalt von künstlichen Zähnen besteht ein zunehmender Bedarf an weiteren Varianten bezüglich Form und Farbe der künstlichen Zähne. Sowohl die Patienten als auch die Zahnärzte und Zahntechniker äußern Wünsche nach einer individuelleren Gestaltung von Prothesen, um von der Ästhetik und der Funktion her Optimales zu bieten. Eine derartige Erweiterung der Sortimentspalette ist kaum möglich und würde bezüglich der Mehrkosten für Formen, Vorratshaltung und Vertriebskosten kaum zu verantworten sein. Es besteht somit die Aufgabe, einerseits die Kosten für künstliche Zähne so niedrig wie möglich zu halten, andererseits die künstlichen Zähne in größtmöglicher Vielfalt nach Form und Farbe zur Verfügung zu stellen.

Diese Aufgabe kann überraschend einfach dadurch gelöst werden, daß ein serienmäßig hergestellter Kunstzahnrohling zur Verfügung gestellt wird, bestehend aus gebrannter dentalkeramischer Masse in Dentinfarbe, in welcher ein vorgepreßter Hartkern eingelagert ist, und einer Retention, dadurch gekennzeichnet, daß die Größe des Kunstzahnrohlings gegenüber dem entsprechenden fertigen Kunstzahn reduziert ist und der Kunstzahnrohling keine Schmelzschicht aufweist. Auf diesen Kunstzahnrohling kann der Zahntechniker sowohl Dentinmasse als auch Schmelzschicht auftragen aus dentalkeramischen Massen, die bisher nur für Brücken und Kronen zur Anwendung gekommen sind. Diese dentalkeramischen Massen werden im allgemeinen bei Temperaturen von 900 bis 960°C gebrannt. Wenn diese Massen auf den erfindungsgemäßen Kunstzahnrohling aufgetragen werden, kommt es beim Brennen zu einer festen und dauerhaften Verbindung der beiden verschiedenen dentalkeramischen Massen, insbesondere wenn die Oberfläche des Kunstzahnrohlings vor dem Auftragen künstlich aufgerauht wird. Dadurch, daß die Größe des Kunstzahnrohlings gegenüber dem entsprechenden fertigen Kunstzahn reduziert ist, kann der Zahntechniker sowohl opakisierte Dentinmasse als auch transparente Schmelzschichten aus dentalkeramischen Massen für Brücken und Kronen auftragen und einbrennen. Der so erhaltene künstliche Zahn ist somit sehr individuell gestaltet und bezüglich Form und Farbe dem jeweiligen Bedürfnis angepaßt. Die mechanische Haltbarkeit dieser dentalkeramischen Massen für Brücken und Kronen ist in gebranntem Zustand durchaus vergleichbar mit der Verschleißfestigkeit bisher bekannter künstliche Zähne aus dentalkeramischen Massen.

Ein besonderes Problem besteht bei Frontzähnen, die vorzugsweise eine Retention aus einer oder mehreren eingebrannten Hülsen aufweisen mit eingelöteten Retentionsstiften. Diese müssen nämlich bereits im erfindungsgemäßen Kunstzahnrohling vorhanden sein, da es dem Zahntechniker nicht zuzumuten ist, solche Retentionsstifte in Hülsen einzulöten. Die bisher verwendeten Retentionsstifte aus vergoldeter Nickellegierung einerseits und das zum Einlöten dieser Stifte verwendete Lot andererseits sind jedoch ungeeignet, da sie den Bedingungen des nachträglichen Brennens der dentalkeramischen Massen für Brücken und Kronen nicht gewachsen sind. Es ist somit erforderlich, daß für derartige Retentionen sowohl die Retentionsstifte als auch das Lot unter den Schmelzbedingungen für dentalkeramische Massen für Brücken und Kronen, insbesondere auch unter Luftzutritt, beständig sind. Das Lot sollte daher nicht unter 1000°C schmelzen. Die Retentionsstifte sollten ebenfalls bei 1000°C unter Luftzutritt weder schmelzen noch oxidieren. Als diesbezüglich besonders geeignet hat sich Platin erwiesen.

Prinzipiell könnten aber auch Stifte aus platiniertem Titan zur Anwendung kommen.

Die Retention kann aber auch aus einem oder mehreren vorgefertigten hochschmelzenden Keramikstiften bestehen. Geeignet sind beispielsweise retentive Keramikteile aus Aluminiumoxid oder mit Zirkon verstärktem Aluminiumoxid.

Da künstliche Zähne aus den erfindungsgemäßen Kunstzahnrohlingen und nachträglich aufgebrachten dentalkeramischen Massen für Brücken und Kronen bezüglich Form und Farbe sehr individuell gestaltet werden können, kann den Bedürfnissen von Patienten, Zahnärzten und Zahntechnikern voll genügt werden. Die Kunstzahnrohlinge hingegen brauchen nur noch in wenigen Größen, Typen und Farben angeboten zu werden.

Während bisher stets versucht wurde, bei künstlichen Zähnen durch Erweiterung des Sortiments den gestiegenen Bedürfnissen nachzukommen, ist es mit Hilfe der erfindungsgemäßen Kunstzahnrohlinge möglich, das Sortiment bezüglich Form und Farbe erheblich zu reduzieren. Entscheidend für dieses Ergebnis war die Reduzierung der Größe der Kunstzahnrohlinge gegenüber den bisherigen entsprechenden fertigen Kunstzähnen, das Weglassen der Schmelzschicht sowie bei Zähnen mit eingebrannten Hülsen und eingelöteten Retentionsstiften das Material für die Retentionsstifte wie auch das Lot den geänderten Bedürfnissen anzupassen. Es hat sicherlich nicht nahegelegen, die bisher gelieferten künstlichen Zähne nicht mehr in der endgültig verwendeten Form gebrauchsfertig zur Verfügung zu stellen und statt dessen die gesamte individuelle Anpassung der künstlichen Zähne auf den Zahntechniker zu verlagern, dessen manuelle Arbeitskraft sicherlich teurer ist als die Herstellung fertiger künstlicher Zähne in großen Serien. Diese Verlagerung ermöglicht aber in technisch einwandfreier Weise, den gestiegenen Wünschen nach weiteren Varianten bezüglich Form und Farbe der künstlichen Zähne nachzukommen. Die Verlagerung auf den Zahntechniker ist technisch erst dadurch möglich geworden, daß dentalkeramische Massen für Brücken und Kronen zur Verfügung stehen, die - bei 900 bis 960°C gebrannt - vergleichbare mechanische Eigenschaften aufweisen wie künstliche Zähne aus gebrannten keramischen Massen, die bei 1100 bis 1350°C gebrannt wurden. Dabei ist jedoch darauf zu achten, daß sich diese dentalkeramischen Massen für Brücken und Kronen beim Einbrennen fest mit den Kunstzahnrohlingen verbinden und daß die Ausdehnungskoeffizienten zumindest sehr ähnlich sind. Dentalkeramische Massen für Brücken und Kronen, die auf Metallegierungen aufgetragen werden, sind daher weniger geeignet. Gut geeignet sind hingegen die Massen, die beispielsweise für das Überziehen gebrannter keramischer Massen zur Anwendung kommen und die von der Anmelderin unter der Bezeichnung VITADUR N zur Verfügung gestellt werden. Selbstverständlich ist es auch möglich, herkömmliche künstliche Zähne mit künstlichen Zähnen aus erfindungsgemäßen Kunstzahnrohlingen und eingebrannten Überzügen aus dentalkeramischen Massen für Brücken und Kronen in einer Prothese zu kombinieren.

## Patentansprüche

1. Serienmäßig hergestellter Kunstzahnrohling, bestehend aus gebrannter dentalkeramischer Masse in Dentinfarbe, in welcher ein vorgepreßter Hartkern eingelagert ist, und einer Retention, dadurch gekennzeichnet, daß die Größe des Kunstzahnrohlings gegenüber dem entsprechenden fertigen Kunstzahn reduziert ist und der Kunstzahnrohling keine Schmelzschicht aufweist.

2. Kunstzahnrohling gemäß Anspruch 1, dadurch gekennzeichnet, daß die Retention aus einer oder mehreren hochschmelzenden eingebrannten Hülsen mit nach dem Brennen eingelöteten hochschmelzenden Retentionsstiften besteht, wobei sowohl die Retentionsstifte als auch das Lot unter den Schmelzbedingungen für dentalkeramische Massen für Brücken und Kronen, insbesondere auch unter Luftzutritt, beständig sind.

3. Kunstzahnrohling gemäß Anspruch 1, dadurch gekennzeichnet, daß die Retention aus einem oder mehreren vorgefertigten hochschmelzenden Keramikteilen besteht.

## Claims

1. An artificial tooth blank made by series production, which consists of a dentin-colored fired dental ceramic composition, wherein a previously compression-molded hard core has been included, and a retention, characterized in that the size of the artificial tooth blank is reduced over that of the corresponding finished artificial tooth and that the artificial tooth blank does not comprise an enamel layer.

2. The artificial tooth blank according to claim 1, characterized in that the retention consists of one or more high-melting fired shells comprising high-melting retention pins soldered therein after firing, whereby the retention pins as well as the solder are stable under the melting conditions for dental ceramic compositions for bridges and crowns, especially in the presence of air as well.

3. The artificial tooth blank according to claim 1, characterized in that the retention consists of one or more pre-fabricated high-melting ceramic parts.

## Revendications

1. Dent artificielle brute fabriquée en série, formée d'une masse de céramique dentaire calcinée ayant la couleur de la dentine, dans laquelle est inséré un noyau dur précomprimé, et d'une partie de rétention, caractérisée en ce que la dimension de la dent artificielle brute est réduite par rapport à la dent artificielle finie correspondante, et la dent artificielle brute ne comporte pas de couche d'émail.

2. Dent artificielle brute selon la revendication 1, caractérisée en ce que la partie de rétention est formée d'une ou plusieurs éléments tubulaires calcinés, à point de fusion élevé, avec des tenons de rétention à point de fusion élevé, soudés après calcination, les tenons de rétention ainsi que la soudure étant stables dans les conditions de fusion pour les masses de céramique dentaire pour bridges et couronnes, en particulier même en cas de pénétration d'air.

3. Dent artificielle brute selon la revendication 1, caractérisée en ce que la partie de rétention est formé d'un ou plusieurs éléments préfabriqués en céramique à point de fusion élevé.
